# FASCICULE DE BREVET EUROPEEN

(11) **EP 4 298 962 B1**
(45) Date de publication et mention de la délivrance du brevet: **04.03.2026**
(21) Numéro de dépôt: 23181033.4
(22) Date de dépôt: 22.06.2023
(51) Int. Cl.: A47J 27/21

(54) **BOUILLOIRE COMPRENANT UN COUVERCLE ÉQUIPÉ D'UN ORIFICE DE VIDANGE**
WASSERKOCHER MIT DECKEL, DER MIT EINER ENTLEERUNGSÖFFNUNG AUSGESTATTET IST
KETTLE COMPRISING A LID PROVIDED WITH A DRAIN OPENING

(30) Priorité: 30.06.2022 FR 2206679
(43) Date de publication de la demande: 03.01.2024
(73) Titulaire: SEB S.A., 69130 Ecully (FR)
(72) Inventeur: ALLEMAND, Bernard, 69134 ECULLY CEDEX (FR); SMAL, Chloé, 69134 ECULLY CEDEX (FR); MANSEAU, Charles, 69134 ECULLY CEDEX (FR)
(74) Mandataire: SEB Développement

(56) Documents cités:
- WO-A1-2022/024595
- CN-A- 110 811 323
- FR-A1- 2 685 184
- JP-B2- 3 041 847

## Description

### Domaine technique

La présente invention concerne le domaine des appareils de chauffage de liquides, et en particulier des bouilloires électriques.

### Etat de la technique

Une bouilloire électrique comprend de façon connue :
- un contenant délimitant un volume interne destiné à contenir de l'eau et dans lequel l'eau est destinée à être chauffée, le contenant comprenant une ouverture de remplissage supérieure débouchant dans le volume interne,
- un couvercle mobile entre une position de fermeture dans laquelle le couvercle ferme l'ouverture de remplissage supérieure et une position d'ouverture dans laquelle le couvercle libère l'ouverture de remplissage supérieure, et
- un circuit d'évacuation de vapeur configuré pour convoyer, à l'extérieur du volume interne et par exemple vers l'extérieur de la bouilloire, de la vapeur générée dans le volume interne lors d'une ébullition de l'eau contenue dans le volume interne, le circuit d'évacuation de vapeur étant formé en partie par le couvercle.

Lors de l'utilisation d'une telle bouilloire électrique, une partie de la vapeur générée dans le volume interne du contenant et s'écoulant dans le circuit d'évacuation de vapeur est susceptible de se condenser dans le couvercle. Il en résulte une accumulation d'eau et une stagnation d'eau dans le couvercle.

Cette eau accumulée dans le couvercle est susceptible de s'écouler de façon indésirable hors du couvercle via des ouvertures d'évacuation de vapeur prévues sur le couvercle par exemple en cas de renversement de la bouilloire ou lors d'une opération ultérieure de versage de l'eau contenue dans le volume interne du contenant dans un récipient, tel qu'une tasse.

Le document JP3041847B2 décrit une bouilloire selon le préambule de la revendication 1.

### Résumé de l'invention

La présente invention vise à remédier à tout ou partie de ces inconvénients.

Le problème technique à la base de l'invention consiste notamment à fournir une bouilloire qui soit de structure simple, fiable et économique, tout en évitant une accumulation d'eau dans le couvercle.

A cet effet, la présente invention concerne une bouilloire, et en particulier une bouilloire électrique, comprenant :
- un contenant délimitant un volume interne destiné à contenir de l'eau et dans lequel l'eau est destinée à être chauffée et notamment portée à ébullition, le contenant comprenant une ouverture de remplissage supérieure débouchant dans le volume interne,
- un couvercle mobile entre une position de fermeture dans laquelle le couvercle ferme l'ouverture de remplissage supérieure et une position d'ouverture dans laquelle le couvercle libère l'ouverture de remplissage supérieure, et
- un circuit d'évacuation de vapeur configuré pour convoyer, à l'extérieur du volume interne et par exemple vers l'extérieur de la bouilloire, de la vapeur générée dans le volume interne lors d'une ébullition de l'eau contenue dans le volume interne, le circuit d'évacuation de vapeur étant formé en partie par le couvercle,
le couvercle comportant un orifice de vidange à travers lequel de l'eau contenue dans le couvercle peut être évacuée hors du couvercle, caractérisée en ce que le contenant comporte un organe d'obturation configuré pour obturer l'orifice de vidange lorsque le couvercle occupe la position de fermeture et pour libérer l'orifice de vidange lorsque le couvercle occupe la position d'ouverture.

Une telle configuration du couvercle permet, lorsque ce dernier est déplacé dans la position d'ouverture, d'assurer une évacuation de la vapeur d'eau condensée dans le couvercle hors de ce dernier via l'orifice de vidange. Par conséquent, la bouilloire selon la présente invention réduit sensiblement les risques d'accumulation d'eau et de stagnation d'eau dans le couvercle.

En outre, la présence de l'organe d'obturation évite, lors l'une opération de versage, que de l'eau contenue dans le volume interne pénètre dans le couvercle via l'orifice de vidange. De plus, en cas de renversement de la bouilloire, l'eau bouillante contenue dans cette dernière n'est pas susceptible de s'écoulant à travers l'orifice de vidange, et donc ensuite de s'écouler hors du couvercle via des ouvertures d'évacuation de vapeur prévues sur le couvercle.

En conséquence, la bouilloire selon la présente invention présente une sécurité d'utilisation accrues par rapport aux bouilloires de l'art antérieur.

La bouilloire peut en outre présenter une ou plusieurs des caractéristiques suivantes, prises seules ou en combinaison.

Selon un mode de réalisation de l'invention, l'organe d'obturation est statique par rapport au contenant.

Selon un mode de réalisation de l'invention, le couvercle est configuré pour être agencé au niveau de l'ouverture de remplissage supérieure et pour fermer le contenant.

Selon un mode de réalisation de l'invention, l'orifice de vidange débouche dans une face inférieure du couvercle. Une telle configuration de l'orifice de vidange permet un écoulement par gravité de la vapeur d'eau condensée dans le couvercle directement dans le contenant lors du déplacement du couvercle dans la position d'ouverture.

Selon un mode de réalisation de l'invention, l'organe d'obturation est un doigt d'obturation configuré pour pénétrer dans l'orifice de vidange et obturer l'orifice de vidange lorsque le couvercle occupe la position de fermeture.

Selon un mode de réalisation de l'invention, l'orifice de vidange est situé dans une partie arrière du couvercle. Une telle disposition de l'orifice de vidange réduit encore les risques de pénétration d'eau le couvercle via l'orifice de vidange lors d'une opération de versage, en particulier lorsque la partie supérieure de la bouilloire est fortement inclinée vers le bas.

Selon un mode de réalisation de l'invention, le couvercle est amovible par rapport au contenant.

Selon un autre mode de réalisation de l'invention, le couvercle est monté pivotant sur le contenant entre la position d'ouverture et la position de fermeture.

Selon un mode de réalisation de l'invention, le circuit d'évacuation de vapeur comporte une chambre interne délimitée par le couvercle, l'orifice de vidange étant relié fluidiquement à la chambre interne.

Selon un mode de réalisation de l'invention, l'orifice de vidange débouche dans une paroi de fond de la chambre interne. Une telle disposition de l'orifice de vidange favorise encore l'évacuation de l'eau contenue dans le couvercle lorsque ce dernier est déplacé dans la position d'ouverture.

Selon un mode de réalisation de l'invention, le contenant présente un axe longitudinal central et comporte une poignée de préhension et un bec verseur configuré pour être situé à l'opposé de la poignée de préhension par rapport à l'axe longitudinal central du contenant.

Selon un mode de réalisation de l'invention, le circuit d'évacuation de vapeur comporte au moins un orifice d'admission de vapeur qui est prévu sur le couvercle et qui est configuré pour être relié fluidiquement au volume interne, délimité par le contenant, lorsque le couvercle occupe la position de fermeture.

Selon un mode de réalisation de l'invention, l'au moins un orifice d'admission de vapeur comporte un premier orifice d'admission de vapeur et un deuxième orifice d'admission de vapeur qui sont prévus sur le couvercle et qui débouchent dans une face inférieure du couvercle.

Selon un mode de réalisation de l'invention, les premier et deuxième orifices d'admission de vapeur débouchent sont situés à proximité d'un bord périphérique de la face inférieure du couvercle.

Selon un mode de réalisation de l'invention, les premier et deuxième orifices d'admission de vapeur sont configurés pour être disposés de part et d'autre d'un plan vertical médian de la bouilloire qui passe par le bec verseur et la poignée de préhension, lorsque le couvercle occupe la position de fermeture. Un tel positionnement des premier et deuxième orifices d'admission de vapeur permet d'éviter ou du moins de limiter sensiblement les risques d'écoulement d'eau bouillante hors de la bouilloire en cas de renversement de cette dernière.

Selon un mode de réalisation de l'invention, les premier et deuxième orifices d'admission de vapeur sont situés dans une moitié avant de la face inférieure du couvercle.

Selon un mode de réalisation de l'invention, la bouilloire est configurée de telle sorte que, lorsque la bouilloire est renversée et que la poignée de préhension et un premier côté latéral du contenant reposent de manière stable sur une surface horizontale, le premier orifice d'admission de vapeur est situé au-dessus du niveau d'eau dans le volume interne, et de telle sorte que, lorsque la bouilloire est renversée et que la poignée de préhension et un deuxième côté latéral du contenant reposent de manière stable sur une surface horizontale, le deuxième orifice d'admission de vapeur est situé au-dessus du niveau d'eau dans le volume interne. Une telle disposition des premier et deuxième orifices d'admission de vapeur permet de garantir une évacuation de la vapeur contenue dans le volume interne hors du contenant même en cas de renversement de la bouilloire.

Selon un mode de réalisation de l'invention, le couvercle comporte un dispositif anti-déversement, également nommé dispositif anti-débordement, configuré pour empêcher un déversement de l'eau contenue dans le volume interne via le circuit d'évacuation de vapeur lorsque la bouilloire est renversée. Un tel disposition anti-déversement permet de réduire les risques d'écoulement d'eau bouillante hors de la bouilloire via le circuit d'évacuation de vapeur en cas de renversement de la bouilloire.

Selon un mode de réalisation de l'invention, le dispositif anti-déversement comporte un premier tube d'écoulement de vapeur comprenant une première ouverture d'entrée de vapeur reliée fluidiquement au premier orifice d'admission de vapeur et une première ouverture de sortie de vapeur débouchant dans la chambre interne, et un deuxième tube d'écoulement de vapeur comprenant une deuxième ouverture d'entrée de vapeur reliée fluidiquement au deuxième orifice d'admission de vapeur et une deuxième ouverture de sortie de vapeur débouchant dans la chambre interne.

Selon un mode de réalisation de l'invention, les premier et deuxième tubes d'écoulement de vapeur sont logés dans la chambre interne délimitée par le couvercle.

Selon un mode de réalisation de l'invention, le circuit d'évacuation de vapeur comporte au moins une ouverture d'évacuation de vapeur prévue sur le couvercle.

Selon un mode de réalisation de l'invention, l'au moins une ouverture d'évacuation de vapeur débouche dans une face supérieure du couvercle.

Selon un mode de réalisation de l'invention, l'au moins une ouverture d'évacuation de vapeur est reliée fluidiquement à la chambre interne délimitée par le couvercle, l'au moins une ouverture d'évacuation de vapeur étant configurée pour permettre une évacuation de la vapeur contenue dans la chambre interne à l'extérieur du couvercle et par exemple vers l'extérieur de la bouilloire.

Selon un mode de réalisation de l'invention, la bouilloire comporte un dispositif d'indexage angulaire, également nommé dispositif de détrompage, configuré pour indexer angulairement le couvercle par rapport au contenant, de manière à définir une unique position de fermeture du couvercle sur le contenant.

Selon un mode de réalisation de l'invention, l'orifice de vidange et l'organe d'obturation forment au moins en partie le dispositif d'indexage angulaire.

Selon un mode de réalisation de l'invention, le dispositif d'indexage angulaire comporte au moins un élément d'indexage, tel qu'une patte d'indexage ou un bossage d'indexage, prévu sur le contenant, et au moins un organe d'indexage, tel qu'un logement d'indexage, prévu sur le couvercle et configuré pour coopérer avec l'au moins élément d'indexage lorsque le couvercle est déplacé vers la position de fermeture.

Selon un mode de réalisation de l'invention, l'au moins un organe d'indexage est situé dans une partie arrière du couvercle.

Selon un mode de réalisation de l'invention, l'au moins un élément d'indexage est disposé au moins en partie dans le volume interne du contenant.

Selon un mode de réalisation de l'invention, l'au moins un élément d'indexage est situé à l'opposé du bec verseur par rapport à l'axe longitudinal central du contenant.

Selon un mode de réalisation de l'invention, l'organe d'obturation est situé à proximité de l'au moins un élément d'indexage.

Selon un mode de réalisation de l'invention, l'organe d'obturation présente un axe central qui est sensiblement parallèle à l'axe longitudinal central du contenant. L'axe central de l'organe d'obturation peut par exemple être incliné par rapport à l'axe longitudinal central du contenant d'un angle d'inclinaison inférieur ou égal à 15°, et par exemple inférieur ou égal à 10°.

Selon un mode de réalisation de l'invention, l'organe d'obturation présente une forme globalement tronconique.

Selon un mode de réalisation de l'invention, l'au moins un élément d'indexage et l'organe d'obturation sont réalisés en une seule pièce.

Selon un mode de réalisation de l'invention, le couvercle comporte un élément d'étanchéité qui est annulaire et qui est configuré pour coopérer de manière étanche avec l'organe d'obturation lorsque le couvercle occupe la position de fermeture.

Selon un mode de réalisation de l'invention, le couvercle est équipé d'un joint d'étanchéité annulaire configuré pour coopérer de manière étanche avec le contenant.

Selon un mode de réalisation de l'invention, la bouilloire comporte un dispositif de fixation configuré pour fixer de manière temporaire et réversible le couvercle au contenant, lorsque le couvercle occupe la position de fermeture.

Selon un mode de réalisation de l'invention, le couvercle est configuré pour reposer sur une partie supérieure du contenant qui délimite l'ouverture de remplissage supérieure.

Selon un mode de réalisation de l'invention, l'orifice de vidange est situé en un point bas de la chambre interne. Une telle disposition de l'orifice de vidange favorise une évacuation de l'eau contenue dans la chambre interne à travers l'orifice de vidange.

Selon un mode de réalisation de l'invention, la paroi de fond de la chambre interne comporte une ou plusieurs surface(s) de guidage inclinée(s) configurée(s) pour orienter et guider l'eau contenue dans la chambre interne vers l'orifice de vidange.

Selon un mode de réalisation de l'invention, la bouilloire comporte un dispositif de contrôle électromécanique comportant un élément bimétallique, le circuit d'évacuation de vapeur étant configuré pour diriger la vapeur générée dans le volume interne vers l'élément bimétallique, le dispositif de contrôle électromécanique étant configuré de telle sorte qu'un afflux de vapeur sur l'élément bimétallique déclenche un arrêt de la chauffe de la bouilloire.

Selon un mode de réalisation de l'invention, l'au moins une ouverture d'évacuation de vapeur est configurée pour diriger la vapeur contenue dans la chambre interne vers l'élément bimétallique.

Selon un mode de réalisation de l'invention, le contenant comporte le bec verseur.

Selon un mode de réalisation de l'invention, le contenant comporte un fond chauffant situé sous le volume interne et configuré pour chauffer l'eau contenue dans le volume interne. De façon avantageuse, le fond chauffant loge un élément électrique chauffant.

Selon un mode de réalisation de l'invention, la bouilloire comporte une base de support sur laquelle est destiné à reposer le contenant.

### Brève description des figures

L'invention sera mieux comprise à l'aide de la description qui suit en référence aux dessins schématiques annexés représentant, à titre d'exemple non limitatif, une forme d'exécution de cette bouilloire.
Figure 1 est une vue en perspective de dessus d'une bouilloire selon la présente l'invention.
Figure 2 est une vue en perspective de dessus d'un contenant de la bouilloire de la figure 1.
Figure 3 est une vue en perspective de dessus d'un couvercle de la bouilloire de la figure 1.
Figure 4 est une vue en perspective de dessous du couvercle de la figure 3.
Figure 5 est une vue en perspective de dessous du couvercle de la figure 3 dans laquelle un boîtier inférieur du couvercle a été déposé.
Figure 6 est une vue en perspective de dessous d'un mécanisme d'actionnement et de deux organes de fixation prévus sur le couvercle de la figure 3.
Figure 7 est une vue en perspective de dessus de l'un des organes de fixation de la figure 6.
Figure 8 est une vue en perspective de dessous du mécanisme d'actionnement de la figure 6.
Figure 9 est une vue en perspective de dessus du couvercle de la figure 3 dans laquelle un capot supérieur du couvercle a été déposé.
Figure 10 est une vue en perspective de dessus du mécanisme d'actionnement et des deux organes de fixation de la figure 6.
Figure 11 est une vue en perspective de dessous d'un capot supérieur du couvercle de la figure 3.
Figure 12 est une vue partielle de côté de la bouilloire de la figure 1 montrant la bouilloire renversée sur une surface horizontale et occupant une position stable dans laquelle une poignée de préhension de la bouilloire et le côté latéral gauche du contenant prennent appui sur la surface horizontale.
Figure 13 est une vue partielle de côté de la bouilloire de la figure 1 montrant la bouilloire renversée sur une surface horizontale et occupant une position stable dans laquelle une poignée de préhension de la bouilloire et le côté latéral droit du contenant prennent appui sur la surface horizontale.
Figure 14 est une vue en coupe du couvercle de la figure 3.
Figure 15 est une vue en perspective de dessous du couvercle de la figure 3, et d'un dispositif d'indexage angulaire et d'un organe d'obturation de la bouilloire de la figure 1.

### Description détaillée

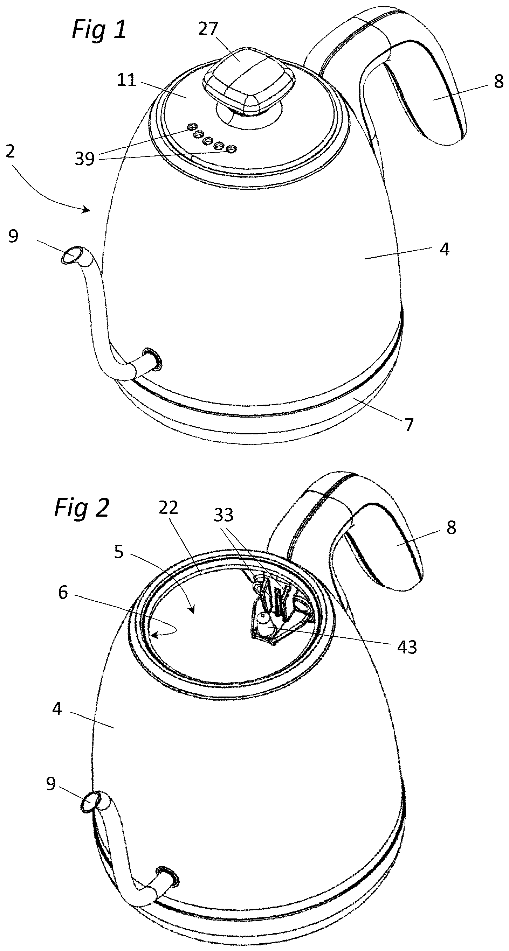

Les figures 1 à 15 représentent une bouilloire 2, et en particulier une bouilloire électrique, selon l'invention.

La bouilloire 2 comporte une base de support (non représentée sur les figures) configuré pour être alimentée électriquement par un cordon d'alimentation (non représenté sur les figures), et un contenant 4 configuré pour reposer sur la base de support.

Le contenant 4 présente un axe longitudinal central A configuré pour s'étendre sensiblement verticalement lorsque le contenant 4 repose sur une surface horizontale. De façon avantageuse, le contenant 4 présente une forme générale de révolution autour de l'axe longitudinal central A.

Le contenant 4 délimite un volume interne 5 destiné à contenir de l'eau et dans lequel l'eau est destinée à être chauffée et notamment portée à ébullition. Le contenant 4 comprend en outre une ouverture de remplissage supérieure 6 débouchant dans le volume interne 5.

Le contenant 4 comporte de plus un fond chauffant 7 situé sous le volume interne 5 et configuré pour chauffer l'eau contenue dans le volume interne 5. De façon connue, le fond chauffant 7 loge un élément électrique chauffant (non représenté sur les figures) configuré pour être alimenté électriquement lorsque le contenant 4 repose sur la base de support.

La bouilloire 2 comporte en outre une poignée de préhension 8 fixée au contenant 4, et un bec verseur 9 situé à l'opposé de la poignée de préhension 8 par rapport à l'axe longitudinal central A du contenant 4. Le bec verseur 9 peut par exemple être fixé au contenant 4.

La bouilloire 2 comporte en outre un couvercle 11 mobile entre une position de fermeture dans laquelle le couvercle 11 ferme l'ouverture de remplissage supérieure 6 et une position d'ouverture dans laquelle le couvercle 11 libère l'ouverture de remplissage supérieure 6. Le couvercle 11 est plus particulièrement configuré pour être agencé au niveau de l'ouverture de remplissage supérieure 6 et pour obturer de manière étanche l'ouverture de remplissage supérieure 6 lorsque le couvercle 11 occupe la position de fermeture. Le couvercle 11 peut par exemple être configuré pour reposer sur un épaulement annulaire prévu sur une partie supérieure du contenant 4 lorsque le couvercle 11 occupe la position de fermeture.

Selon le mode de réalisation représenté sur les figures, le couvercle 11 est amovible par rapport au contenant 4. Cependant, selon une variante de réalisation de l'invention, le couvercle 11 pourrait être monté pivotant sur le contenant 4.

Le couvercle 11 est pourvu d'une face inférieure 12 configurée pour être située en regard du volume interne 5 du contenant 4, et d'une face supérieure 13 configurée pour être orientée à l'opposé du contenant 4.

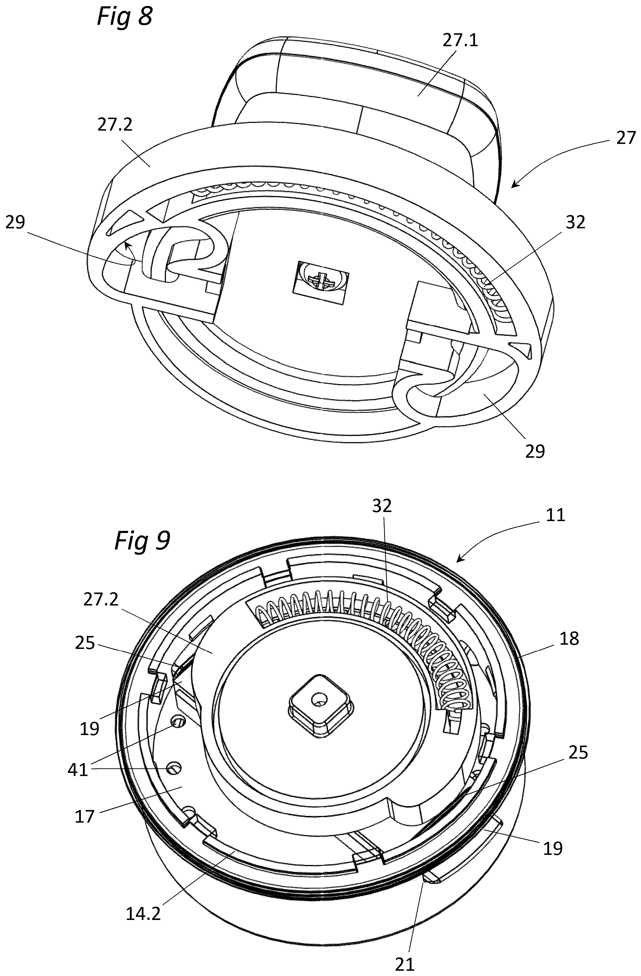

Selon le mode de réalisation de l'invention représenté sur les figures, le couvercle 11 comporte un boîtier de couvercle 14 comportant un boîtier inférieur 14.1 et un boîtier supérieur 14.2 qui sont fixés l'un à l'autre et qui délimitent une chambre interne 15 dont la fonction sera décrite ci-après. Le couvercle 11 comporte en outre un capot supérieur 16 fixé au boîtier supérieur 14.2 et recouvrant le boîtier supérieur 14.2. Le capot supérieur 16 et le boîtier supérieur 14.2 délimitent un logement de couvercle 17 (voir la figure 9) dont la fonction sera décrite ci-après.

Le couvercle 11 comporte également un joint d'étanchéité annulaire 18 fixé au boîtier de couvercle 14, et plus particulièrement au boîtier supérieur 14.2, et s'étendant autour du boîtier de couvercle 14. Le joint d'étanchéité annulaire 18 est configuré pour coopérer de manière étanche avec le contenant 4, et plus particulièrement avec l'ouverture de remplissage supérieure 6.

La bouilloire 2 comporte de plus un dispositif de fixation configuré pour fixer de manière temporaire et réversible le couvercle 11 au contenant 4, lorsque le couvercle 11 occupe la position de fermeture.

Selon le mode de réalisation représenté sur les figures, le dispositif de fixation comporte plusieurs organes de verrouillage 19, tels que des doigts de verrouillage ou des loquets de verrouillage, prévus sur le couvercle 11 et répartis autour d'un axe central du couvercle 11, et plus particulièrement deux organes de verrouillage 19 qui sont diamétralement opposés par rapport à l'axe central du couvercle 11. Chaque organe de verrouillage 19 est logé dans le logement de couvercle 17 et est configuré pour faire saillie hors du couvercle 11 à travers une ouverture traversante 21 respective qui débouche dans une surface périphérique externe du couvercle 11, et plus particulièrement du boîtier de couvercle 14, et en dessous du joint d'étanchéité annulaire 18. Selon le mode de réalisation représenté sur les figures, chaque ouverture traversante 21 s'étend à travers le capot supérieur 16 et les boîtiers inférieur et supérieur 14.1, 14.2.

Le dispositif de fixation comporte au moins un élément de verrouillage 22 prévu sur une surface interne du contenant 4 et situé à proximité de l'ouverture de remplissage supérieure 6. Selon le mode de réalisation représenté sur les figures, le dispositif de fixation comporte un unique élément de verrouillage 22 et ce dernier est formé par un rebord périphérique qui est orienté vers le fond chauffant 7 du contenant 4 et qui délimite en partie l'ouverture de remplissage supérieure 6. Les organes de verrouillage 19 sont plus particulièrement configurés pour venir en butée contre un bord inférieur du rebord périphérique lorsque le couvercle 11 est fixé au contenant 4. Cependant, selon une variante de réalisation de l'invention, le dispositif de fixation pourrait comporter plusieurs éléments de verrouillage 22, et ces derniers pourraient être par exemple des logements de verrouillage ou des encoches de verrouillage configuré(e)s pour loger respectivement les organes de verrouillage 19.

Les organes de verrouillage 19 sont montés coulissants par rapport au couvercle 11 selon une direction de coulissement et entre une position de verrouillage dans laquelle chaque organe de verrouillage 19 fait saillie hors du boîtier de couvercle 14 à travers l'ouverture traversante 21 respective et est configuré pour coopérer avec l'élément de verrouillage 22 respectif de manière à fixer le couvercle 11 au contenant 4, et une position de libération dans laquelle chaque organe de verrouillage 19 est configuré pour libérer l'élément de verrouillage 22 respectif de telle sorte que le couvercle 11 peut être retiré du contenant 4. De façon avantageuse, la direction de coulissement s'étend sensiblement radialement par rapport à un axe central du couvercle 11.

Chaque organe de verrouillage 19 peut par exemple être configuré pour être situé en retrait de la surface périphérique externe du couvercle 11 ou pour être affleurant avec la surface périphérique externe du couvercle 11 lorsque les organes de verrouillage 19 occupent la position de libération.

De façon avantageuse, chaque organe de verrouillage 19 comporte une surface inclinée 23, telle qu'un chanfrein d'extrémité, configurée pour coopérer avec le contenant 4 lorsque le couvercle 11 est introduit dans l'ouverture de remplissage supérieure 6, de manière à automatiquement déplacer les organes de verrouillage 19 dans la position de libération. Une telle configuration du dispositif de fixation permet une fixation aisée du couvercle 11 sur le contenant 4.

Selon le mode de réalisation représenté sur les figures, le dispositif de fixation comporte un organe de rappel 24, tel qu'un ressort hélicoïdal, logé dans le logement de couvercle 17 et configuré pour rappeler les organes de verrouillage 19 dans la position de verrouillage. L'organe de rappel 24 peut par exemple être interposé entre les deux organes de verrouillage 19 et s'étendre sensiblement coaxialement aux organes de verrouillage 19.

Le dispositif de fixation comporte en outre deux organes d'étanchéité 25 logés dans le logement de couvercle 17 et distincts du joint d'étanchéité annulaire 18. Les deux organes d'étanchéité 25 sont configurés chacun pour assurer une étanchéité au niveau d'une ouverture traversante 21 respective prévue sur le couvercle 11.

Chaque organe d'étanchéité 25 est fixé au couvercle 11, et par exemple au capot supérieur 16. Chaque organe d'étanchéité 25 est annulaire et s'étend autour d'un organe de verrouillage 19 respectif. Chaque organe d'étanchéité 25 est donc plus particulièrement configuré pour coopérer de manière étanche avec une ouverture traversante 21 respective et un organe de verrouillage 19 respectif. De façon avantageuse, chaque organe de verrouillage 19 est configuré pour comprimer l'organe d'étanchéité 25 respectif lorsque les organes de verrouillage 19 occupent la position de verrouillage. Une telle configuration des organes de verrouillage 19 améliore encore l'étanchéité au niveau de chacune des ouvertures traversantes 21.

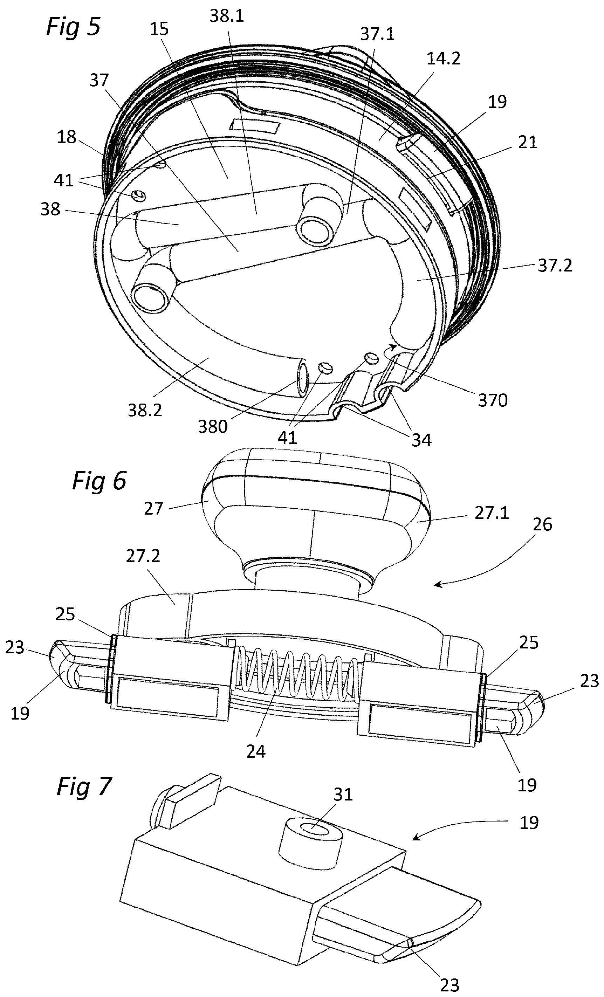

Comme montré plus particulièrement sur la figure 6, la bouilloire 2 comporte un mécanisme d'actionnement 26 prévu sur le couvercle 11 et configuré pour déplacer les organes de verrouillage 19 dans la position de libération lorsque le mécanisme d'actionnement 26 est actionné par un utilisateur.

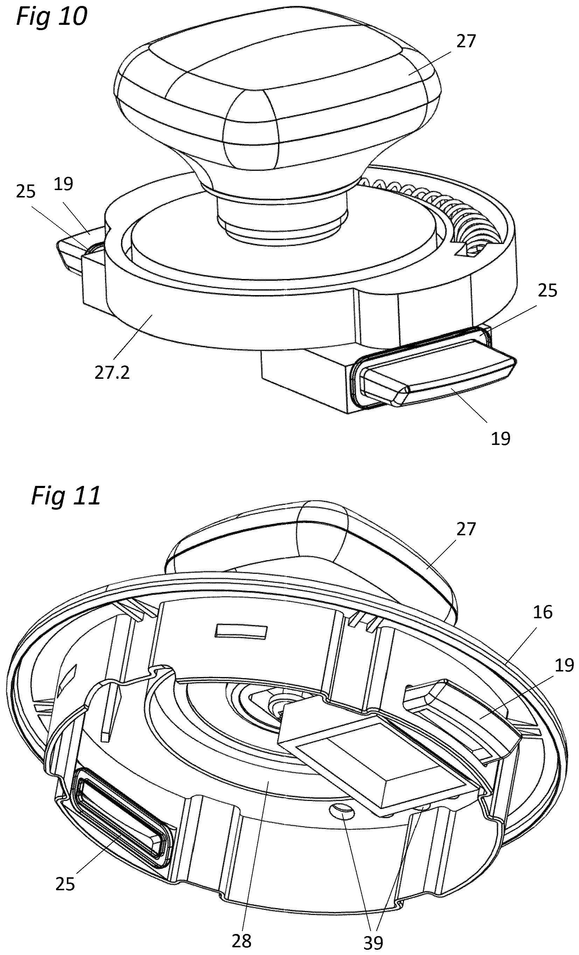

Le mécanisme d'actionnement 26 comporte plus particulièrement un organe d'actionnement 27 qui est actionnable manuellement par un utilisateur et qui est configuré pour déplacer les organes de verrouillage 19 de la position de verrouillage à la position de libération. De façon avantageuse, l'organe d'actionnement 27 est monté mobile en rotation par rapport au couvercle 11 autour d'un axe d'actionnement, par exemple colinéaire avec l'axe central du couvercle 11, et entre une première position d'actionnement et une deuxième position d'actionnement. Le capot supérieur 16 peut par exemple comporter un organe de guidage 28 (voir la figure 11), tel qu'une nervure de guidage annulaire s'étendant autour de l'axe central du couvercle 11, configuré pour guider en rotation l'organe d'actionnement 27 lorsque l'organe d'actionnement 27 est déplacé entre les première et deuxième positions d'actionnement.

L'organe d'actionnement 27 et les organes de verrouillage 19 sont configurés de telle sorte qu'un déplacement de l'organe d'actionnement 27 de la première position d'actionnement à la deuxième position d'actionnement entraîne un déplacement des organes de verrouillage 19 de la position de verrouillage à la position de libération.

Selon le mode de réalisation représenté sur les figures, l'organe d'actionnement 27 comporte deux surfaces de came 29, et chaque organe de verrouillage 19 comporte un ergot 31 en contact avec une surface de came 29 respective. Chaque ergot 31 est en contact glissant sur la surface de came 29 respective de telle sorte que, lorsque l'organe d'actionnement 27 est déplacé de la première position d'actionnement à la deuxième position d'actionnement, chaque ergot 31 se déplace par rapport à l'organe d'actionnement 27 en glissant sur la surface de came 29 respective et entraîne un déplacement de l'organe de verrouillage 19 respectif de la position de verrouillage à la position de libération.

De façon avantageuse, le mécanisme d'actionnement 26 comporte un élément de sollicitation 32, tel qu'un ressort de sollicitation logé dans le logement de couvercle 17 et prenant appui d'une part sur l'organe d'actionnement 27 et d'autre part sur le couvercle 11, configuré pour solliciter l'organe d'actionnement 27 dans la première position d'actionnement.

Selon le mode de réalisation représenté sur les figures, l'organe d'actionnement 27 comporte une partie de manipulation 27.1 configurée pour être manipulée par un utilisateur, et une partie d'actionnement 27.2, qui présente une forme générale de disque et qui est logée dans le logement de couvercle 17, configurée pour coopérer avec les organes de verrouillage 19.

Comme montré plus particulièrement sur les figures 2 et 5, la bouilloire 2 comporte un dispositif d'indexage angulaire, également nommé dispositif de détrompage, configuré pour indexer angulairement le couvercle par rapport au contenant, de manière à définir une unique position de fermeture du couvercle 11 sur le contenant 4.

Le dispositif d'indexage angulaire peut par exemple comporter (voir les figures 2, 5 et 15) un ou plusieurs élément(s) d'indexage 33, tel qu'une patte d'indexage ou un bossage d'indexage, prévu(s) sur le contenant 4, et un ou plusieurs organe(s) d'indexage 34, tel qu'un logement d'indexage, prévu(s) sur le couvercle 11 et configuré(s) pour coopérer avec le ou les élément(s) d'indexage 33 lorsque le couvercle 11 est déplacé vers la position de fermeture. De façon avantageuse, le ou les organe(s) d'indexage 34 est(sont) situé(s) dans une partie arrière du couvercle 11, et le ou les élément(s) d'indexage 33 est(sont) disposé(s) au moins en partie dans le volume interne 5 du contenant 4. Selon le mode de réalisation représenté sur les figures, le ou les élément(s) d'indexage 33 est(sont) situé(s) à l'opposé du bec verseur 9 par rapport à l'axe longitudinal central A du contenant 4.

La bouilloire 2 comporte également un circuit d'évacuation de vapeur configuré pour convoyer, à l'extérieur du volume interne 5 et par exemple vers l'extérieur de la bouilloire 2, de la vapeur générée dans le volume interne 5 lors d'une ébullition de l'eau contenue dans le volume interne 5.

Le circuit d'évacuation de vapeur comprend notamment un premier orifice d'admission de vapeur 35 et un deuxième orifice d'admission de vapeur 36 qui sont prévus sur le couvercle 11 et qui débouchent dans la face inférieure 12 du couvercle 11 et à proximité d'un bord périphérique de la face inférieure 12 du couvercle 11. Lorsque le couvercle 11 occupe la position de fermeture et que le contenant 4 repose sur une surface horizontale, les premier et deuxième orifices d'admission de vapeur 35, 36 débouchent dans le volume interne 5 délimité par le contenant 4 et au-dessus d'un niveau de remplissage maximal du contenant 4. De façon avantageuse, les premier et deuxième orifices d'admission de vapeur 35, 36 sont situés dans une moitié avant de la face inférieure 12 du couvercle 11.

Selon le mode de réalisation représenté sur les figures, lorsque le couvercle 11 occupe la position de fermeture, les premier et deuxième orifices d'admission de vapeur 35, 36 sont disposés de part et d'autre d'un plan vertical médian P de la bouilloire 2 qui passe par le bec verseur 9 et la poignée de préhension 8, et sont avantageusement disposés de manière symétrique par rapport au plan vertical médian P de la bouilloire 2.

De façon avantageuse, le couvercle 11 comporte un dispositif anti-déversement, également nommé dispositif anti-débordement, configuré pour empêcher un déversement de l'eau contenue dans le volume interne 5 via le circuit d'évacuation de vapeur lorsque la bouilloire 2 est renversée.

Selon le mode de réalisation représenté sur les figures, le dispositif anti-déversement comprend (voir notamment la figure 5) un premier tube d'écoulement de vapeur 37 comprenant une première ouverture d'entrée de vapeur reliée fluidiquement au premier orifice d'admission de vapeur 35 et une première ouverture de sortie de vapeur 370 débouchant dans la chambre interne 15 délimitée par le couvercle 11, et un deuxième tube d'écoulement de vapeur 38 comprenant une deuxième ouverture d'entrée de vapeur reliée fluidiquement au deuxième orifice d'admission de vapeur 36 et une deuxième ouverture de sortie de vapeur 380 débouchant dans la chambre interne 15. De façon avantageuse, les premier et deuxième tubes d'écoulement de vapeur 37, 38 sont logés dans la chambre interne 15.

Les première et deuxième ouvertures de sortie de vapeur 350, 360 sont plus particulièrement configurées pour être disposées de part et d'autre du plan vertical médian P de la bouilloire 2, et avantageusement pour être disposées de manière symétrique par rapport au plan vertical médian P de la bouilloire 2. Selon le mode de réalisation représenté sur les figures, les première et deuxième ouvertures de sortie de vapeur 350, 360 sont situées dans une partie arrière de la chambre interne 15, et sont configurées pour être orientées à l'opposé du bec verseur 9, c'est-à-dire vers l'arrière de la bouilloire 2 et donc vers la poignée de préhension 8.

Le premier tube d'écoulement de vapeur 37 peut par exemple être configuré pour être incliné par rapport à l'horizontale lorsque le contenant 4 repose sur une surface horizontale, de manière à guider de l'eau contenue dans le premier tube d'écoulement de vapeur 37 vers le premier orifice d'admission de vapeur 35, et de façon similaire le deuxième tube d'écoulement de vapeur 38 peut par exemple être configuré pour être incliné par rapport à l'horizontale lorsque le contenant 4 repose sur une surface horizontale, de manière à guider de l'eau contenue dans le deuxième tube d'écoulement de vapeur 38 vers le deuxième orifice d'admission de vapeur 36.

Le circuit d'évacuation de vapeur comprend de plus plusieurs ouvertures d'évacuation de vapeur 39 prévues sur le couvercle 11 et reliées fluidiquement à la chambre interne 15 délimitée par le couvercle 11. Les ouvertures d'évacuation de vapeur 39 sont configurées pour permettre une évacuation de la vapeur contenue dans la chambre interne 15 à l'extérieur du couvercle 11 et par exemple vers l'extérieur de la bouilloire 2.

Selon le mode de réalisation représenté sur les figures, les ouvertures d'évacuation de vapeur 39 débouchent dans la face supérieure 13 du couvercle 11, et sont reliées fluidiquement à la chambre interne 15 via le logement de couvercle 17 et des trous de passage 41 qui sont prévus sur le boîtier de couvercle 14, et plus particulièrement sur le boîtier supérieur 14.2, et qui sont configurées pour relier fluidiquement la chambre interne 15 au logement de couvercle 17.

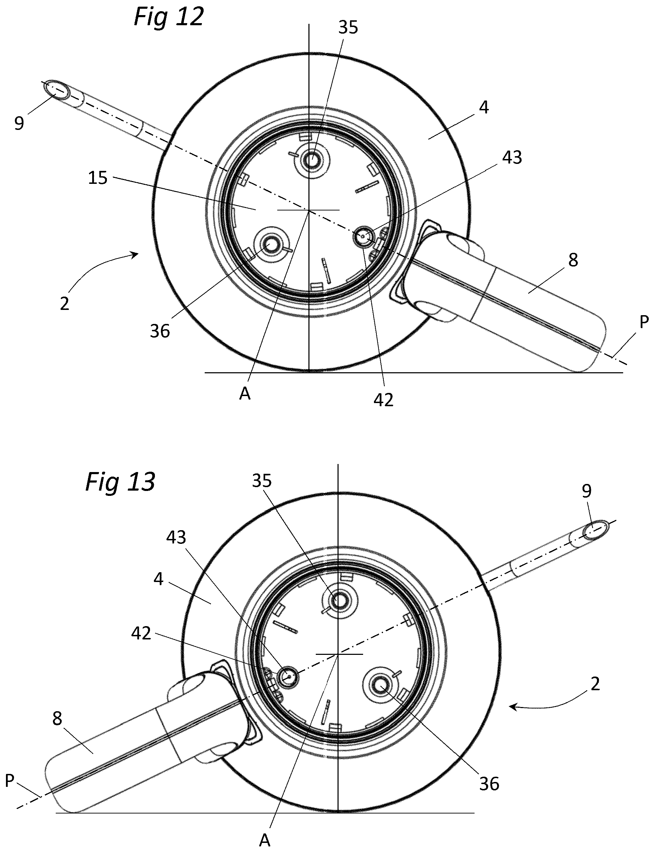

Comme montré plus particulièrement sur les figures 12 et 13, la bouilloire 2 est configurée :
- de telle sorte que, lorsque la bouilloire 2 est renversée et que la poignée de préhension 8 et un premier côté latéral, à savoir le côté gauche, du contenant 4 reposent de manière stable sur une surface horizontale, le premier orifice d'admission de vapeur 35 est situé au-dessus du niveau d'eau dans le volume interne 5, et
- de telle sorte que, lorsque la bouilloire 2 est renversée et que la poignée de préhension 8 et un deuxième côté latéral, à savoir le côté droit, du contenant 4 reposent de manière stable sur une surface horizontale, le deuxième orifice d'admission de vapeur 36 est situé au-dessus du niveau d'eau dans le volume interne 5.

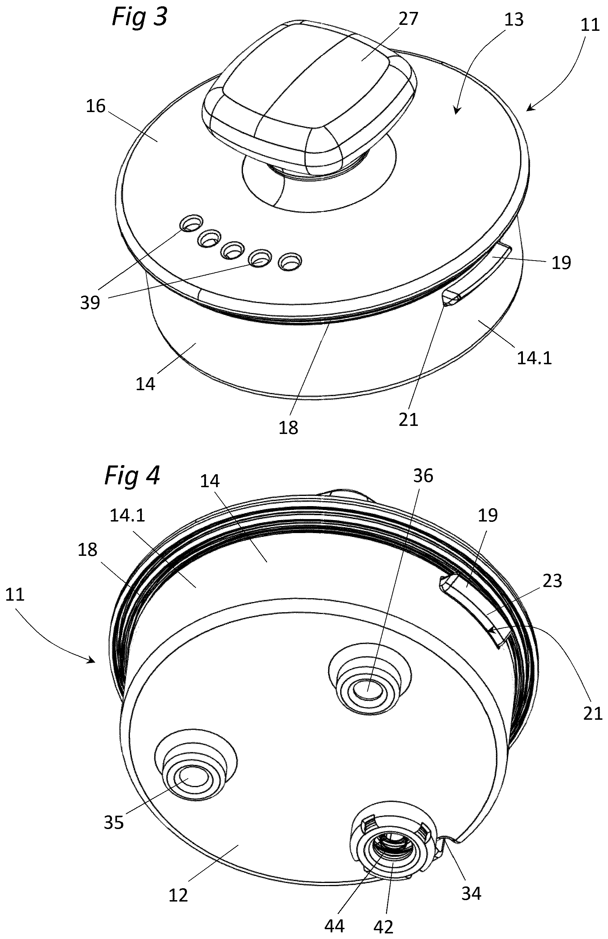

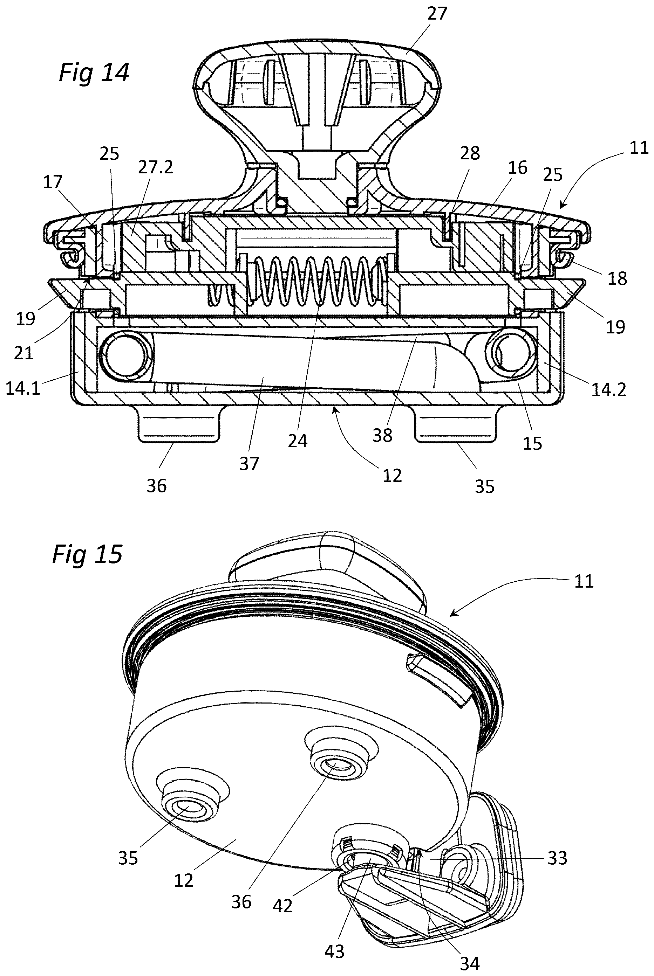

Comme montré plus particulièrement sur les figures 4 et 15, le couvercle 11 comporte en outre un orifice de vidange 42 à travers lequel de l'eau contenue dans le couvercle 11 peut être évacuée hors du couvercle 11. L'orifice de vidange 42 est relié fluidiquement à la chambre interne 15 délimitée par le couvercle 11. De façon avantageuse, l'orifice de vidange 42 est situé dans une partie arrière du couvercle 11 et débouche d'une part dans une paroi de fond de la chambre interne 15 et d'autre part dans la face inférieure 12 du couvercle 11. Afin de favoriser une évacuation de l'eau contenue dans la chambre interne 15 à travers l'orifice de vidange 42, ce dernier peut par exemple être situé en un point bas de la chambre interne 15 et/ou la paroi de fond de la chambre interne 15 peut par exemple comporter une ou plusieurs surface(s) de guidage inclinée(s) configurée(s) pour orienter et guider l'eau contenue dans la chambre interne 15 vers l'orifice de vidange 42.

Comme montré sur les figure 2 et 15, le contenant 4 comporte un organe d'obturation 43 configuré pour obturer l'orifice de vidange 42 lorsque le couvercle 11 occupe la position de fermeture et pour libérer l'orifice de vidange 42 lorsque le couvercle 11 occupe la position d'ouverture. Selon le mode de réalisation représenté sur les figures, l'organe d'obturation 43 est un doigt d'obturation configuré pour pénétrer dans l'orifice de vidange 42 et obturer l'orifice de vidange 42 lorsque le couvercle 11 occupe la position de fermeture. L'organe d'obturation 43 peut par exemple présenter une forme globalement tronconique.

L'organe d'obturation 43 présente un axe central qui peut par exemple être parallèle à l'axe longitudinal central A du contenant 4, ou être incliné par rapport à l'axe longitudinal central A du contenant 4 d'un angle d'inclinaison inférieur ou égal à 15°, et par exemple inférieur ou égal à 10°.

Selon le mode de réalisation représenté sur les figures, l'organe d'obturation 43 est situé à proximité du ou des élément(s) d'indexage 33. De façon avantageuse, l'organe d'obturation 43 et le ou les élément(s) d'indexage 33 sont réalisés en une seule pièce.

De façon avantageuse, le couvercle 11 comporte un élément d'étanchéité 44 qui est annulaire et qui est configuré pour coopérer de manière étanche avec l'organe d'obturation 43 lorsque le couvercle occupe la position de fermeture.

Selon un mode de réalisation de l'invention non représenté sur les figures, la bouilloire 2 pourrait comporter un dispositif de contrôle électromécanique comportant un élément bimétallique, et le circuit d'évacuation de vapeur pourrait comporter au moins une ouverture d'évacuation de vapeur 39 qui est configurée pour être reliée fluidiquement à la chambre interne 15 délimitée par le couvercle 11 et qui est configurée pour diriger la vapeur contenue dans la chambre interne 15 vers l'élément bimétallique, le dispositif de contrôle électromécanique étant configuré de telle sorte qu'un afflux de vapeur sur l'élément bimétallique déclenche un arrêt de la chauffe de la bouilloire 2.

L'élément bimétallique peut par exemple être disposé dans la poignée de préhension 8. Dans ce cas, l'au moins une ouverture d'évacuation de vapeur 39 est prévue dans une partie arrière du couvercle 11 et est configurée pour être orientée vers la poignée de préhension 8.

Selon une variante de réalisation de l'invention, l'élément bimétallique pourrait être disposé dans une partie inférieure du contenant 4. Dans ce cas, l'au moins une ouverture d'évacuation de vapeur 39 est prévue dans une partie arrière du couvercle 11 et est configurée pour être reliée fluidiquement à un tube vapeur qui est agencé dans le contenant 4 et qui est relié fluidiquement à l'élément bimétallique.

Selon un autre mode de réalisation de l'invention non représenté sur les figures, l'organe d'actionnement 27 pourrait comporter deux éléments de manipulation accessibles par exemple depuis la face supérieure 13 du couvercle 11 et agencés respectivement sur les deux organes de verrouillage 19. Les deux éléments de manipulation pourraient par exemple être configurés pour déplacer organes de verrouillage 19 dans la position de libération par pincement des deux éléments de manipulation, c'est-à-dire par un rapprochement des deux éléments de manipulation l'un de l'autre.

Bien entendu, la présente invention n'est nullement limitée au mode de réalisation décrit et illustré qui n'a été donné qu'à titre d'exemple.

## Revendications

1. Bouilloire (2) comprenant :
- un contenant (4) délimitant un volume interne (5) destiné à contenir de l'eau et dans lequel l'eau est destinée à être chauffée, le contenant (4) comprenant une ouverture de remplissage supérieure (6) débouchant dans le volume interne (5),
- un couvercle (11) mobile entre une position de fermeture dans laquelle le couvercle (11) ferme l'ouverture de remplissage supérieure (6) et une position d'ouverture dans laquelle le couvercle (11) libère l'ouverture de remplissage supérieure (6), et
- un circuit d'évacuation de vapeur configuré pour convoyer, à l'extérieur du volume interne (5), de la vapeur générée dans le volume interne (5) lors d'une ébullition de l'eau contenue dans le volume interne (5), le circuit d'évacuation de vapeur étant formé en partie par le couvercle (11),
le couvercle (11) comportant un orifice de vidange (42) à travers lequel de l'eau contenue dans le couvercle (11) peut être évacuée hors du couvercle (11), **caractérisée en ce que** le contenant (4) comporte un organe d'obturation (43) configuré pour obturer l'orifice de vidange (42) lorsque le couvercle (11) occupe la position de fermeture et pour libérer l'orifice de vidange (42) lorsque le couvercle (11) occupe la position d'ouverture.

2. Bouilloire (2) selon la revendication 1, dans laquelle l'orifice de vidange (42) débouche dans une face inférieure du couvercle (11).

3. Bouilloire (2) selon la revendication 1 ou 2, dans laquelle l'organe d'obturation (43) est un doigt d'obturation configuré pour pénétrer dans l'orifice de vidange (42) et obturer l'orifice de vidange (42) lorsque le couvercle (11) occupe la position de fermeture.

4. Bouilloire (2) selon l'une quelconque des revendications 1 à 3, dans laquelle l'orifice de vidange (42) est situé dans une partie arrière du couvercle (11).

5. Bouilloire (2) selon l'une quelconque des revendications 1 à 4, dans laquelle le couvercle (11) est amovible par rapport au contenant (4).

6. Bouilloire (2) selon l'une quelconque des revendications 1 à 5, dans laquelle le circuit d'évacuation de vapeur comporte une chambre interne (15) délimitée par le couvercle (11), l'orifice de vidange (42) étant relié fluidiquement à la chambre interne (15).

7. Bouilloire (2) selon l'une quelconque des revendications 1 à 6, dans laquelle le circuit d'évacuation de vapeur comporte au moins un orifice d'admission de vapeur qui est prévu sur le couvercle (11) et qui est configuré pour être relié fluidiquement au volume interne (5), délimité par le contenant (4), lorsque le couvercle (11) occupe la position de fermeture.

8. Bouilloire (2) selon la revendication 7, dans laquelle l'au moins un orifice d'admission de vapeur comporte un premier orifice d'admission de vapeur (35) et un deuxième orifice d'admission de vapeur (36) qui sont prévus sur le couvercle (11) et qui débouchent dans une face inférieure (12) du couvercle (11).

9. Bouilloire (2) selon l'une quelconque des revendications 1 à 8, dans laquelle le couvercle (11) comporte un dispositif anti-déversement configuré pour empêcher un déversement de l'eau contenue dans le volume interne (5) via le circuit d'évacuation de vapeur lorsque la bouilloire (2) est renversée.

10. Bouilloire (2) selon la revendication 9 en combinaison avec la revendication 6, dans laquelle le dispositif anti-déversement comporte un premier tube d'écoulement de vapeur (37) comprenant une première ouverture d'entrée de vapeur reliée fluidiquement au premier orifice d'admission de vapeur (35) et une première ouverture de sortie de vapeur débouchant dans la chambre interne (15), et un deuxième tube d'écoulement de vapeur (38) comprenant une deuxième ouverture d'entrée de vapeur reliée fluidiquement au deuxième orifice d'admission de vapeur (36) et une deuxième ouverture de sortie de vapeur débouchant dans la chambre interne (15).

11. Bouilloire (2) selon l'une quelconque des revendications 1 à 10, laquelle comporte un dispositif d'indexage angulaire configuré pour indexer angulairement le couvercle (11) par rapport au contenant (4), de manière à définir une unique position de fermeture du couvercle (11) sur le contenant (4).

12. Bouilloire (2) selon la revendication 11, dans laquelle le dispositif d'indexage angulaire comporte au moins un élément d'indexage (33) prévu sur le contenant (4), et au moins un organe d'indexage (34) prévu sur le couvercle (11) et configuré pour coopérer avec l'au moins élément d'indexage (33) lorsque le couvercle (11) est déplacé vers la position de fermeture.

13. Bouilloire (2) selon la revendication 12, dans laquelle l'au moins un organe d'indexage (34) est situé dans une partie arrière du couvercle (11).

14. Bouilloire (2) selon l'une quelconque des revendications 1 à 13, dans laquelle le contenant (4) présente un axe longitudinal central (A) et comporte une poignée de préhension (8) et un bec verseur (9) configuré pour être situé à l'opposé de la poignée de préhension (8) par rapport à l'axe longitudinal central (A) du contenant (4).

15. Bouilloire (2) selon la revendication 14 en combinaison avec la revendication 12, dans laquelle l'au moins un élément d'indexage (33) est situé à l'opposé du bec verseur (9) par rapport à l'axe longitudinal central (A) du contenant (4).

## Patentansprüche

1. Wasserkocher (2), der Folgendes umfasst:
∘ einen Behälter (4), der ein Innenvolumen (5) definiert, das dazu bestimmt ist, Wasser zu enthalten, wobei das Wasser erwärmt werden soll, und der Behälter (4) eine obere Einfüllöffnung (6) aufweist, die in das Innenvolumen (5) mündet,
∘ einen Deckel (11), der zwischen einer geschlossenen Position, in der der Deckel (11) die obere Einfüllöffnung (6) schließt, und einer offenen Position, in der der Deckel (11) die obere Einfüllöffnung (6) freigibt, beweglich ist, und
∘ einen Dampfauslass-Schaltkreis, der dafür konfiguriert ist, bei einem Außenbereich des Innenvolumens (5) erzeugten Dampf aus dem Innenvolumen (5) während des Kochens des im Innenvolumen (5) enthaltenen Wassers zu leiten, wobei der Dampfauslass-Schaltkreis zum Teil durch den Deckel (11) gebildet wird, der Deckel (11) eine Abflussöffnung (42) besitzt, durch die Wasser, das im Deckel (11) enthalten ist, aus dem Deckel (11) abgeführt werden kann, **dadurch gekennzeichnet, dass** der Behälter (4) ein Verschlusselement (43) besitzt, das so konfiguriert ist, dass es die Abflussöffnung (42) abdichtet, wenn sich der Deckel (11) in der geschlossenen Position befindet, und die Abflussöffnung (42) freigibt, wenn sich der Deckel (11) in der offenen Position befindet.

2. Wasserkocher (2) nach Anspruch 1, wobei die Abflussöffnung (42) in eine Unterseite des Deckels (11) mündet.

3. Wasserkocher (2) nach Anspruch 1 oder 2, wobei das Verschlusselement (43) ein dichtender Finger ist, der dafür konfiguriert ist, in die Abflussöffnung (42) einzudringen und die Abflussöffnung (42) abzudichten, wenn sich der Deckel (11) in der geschlossenen Position befindet.

4. Wasserkocher (2) nach einem der Ansprüche 1 bis 3, wobei die Abflussöffnung (42) in einem hinteren Abschnitt des Deckels (11) angeordnet ist.

5. Wasserkocher (2) nach einem der Ansprüche 1 bis 4, wobei der Deckel (11) gegenüber dem Behälter (4) abnehmbar ist.

6. Wasserkocher (2) nach einem der Ansprüche 1 bis 5, wobei der Dampfauslass-Schaltkreis eine interne Kammer (15) umfasst, die durch den Deckel (11) begrenzt ist, wobei die Abflussöffnung (42) fluidisch mit der internen Kammer (15) verbunden ist.

7. Wasserkocher (2) nach einem der Ansprüche 1 bis 6, wobei der Dampfauslass-Schaltkreis mindestens eine Dampfeinlassöffnung umfasst, die auf dem Deckel (11) vorgesehen ist und die bei einer geschlossenen Position des Deckels (11) fluidisch mit dem Innenvolumen (5), das durch den Behälter (4) begrenzt wird, verbunden ist.

8. Wasserkocher (2) nach Anspruch 7, wobei mindestens eine Dampfeinlassöffnung einen ersten Dampfeinlass (35) und einen zweiten Dampfeinlass (36) umfasst, die auf dem Deckel (11) vorgesehen sind und in eine Unterseite (12) des Deckels (11) münden.

9. Wasserkocher (2) nach einem der Ansprüche 1 bis 8, wobei der Deckel (11) eine Anti-Verschüttungsvorrichtung umfasst, die so konfiguriert ist, dass sie das Verschütten von Wasser, das im Innenvolumen (5) enthalten ist, über den Dampfauslass-Schaltkreis verhindert, wenn der Wasserkocher (2) umkippt.

10. Wasserkocher (2) nach Anspruch 9 in Kombination mit Anspruch 6, wobei die Anti-Verschüttungsvorrichtung ein erstes Dampfflussrohr (37) umfasst, das eine erste Dampfeinlassöffnung aufweist, die fluidisch mit dem ersten Dampfeinlass (35) verbunden ist, und eine erste Dampfaußlassöffnung, die in die interne Kammer (15) mündet, sowie ein zweites Dampfflussrohr (38), das eine zweite Dampfeinlassöffnung besitzt, die fluidisch mit dem zweiten Dampfeinlass (36) verbunden ist, und eine zweite Dampfaußlassöffnung, die in die interne Kammer (15) mündet.

11. Wasserkocher (2) nach einem der Ansprüche 1 bis 10, der eine Winkelindexierungsvorrichtung umfasst, die so konfiguriert ist, dass sie den Deckel (11) innerhalb eines Winkelbereichs gegenüber dem Behälter (4) indiziert, um eine eindeutige geschlossene Position des Deckels (11) auf dem Behälter (4) zu definieren.

12. Wasserkocher (2) nach Anspruch 11, wobei die Winkelindexierungsvorrichtung mindestens ein Indexierungselement (33) umfasst, das auf dem Behälter (4) vorgesehen ist, und mindestens ein Indexierungsorgan (34), das auf dem Deckel (11) vorgesehen und so konfiguriert ist, dass es mit dem mindestens einen Indexierungselement (33) zusammenarbeitet, wenn der Deckel (11) zur geschlossenen Position bewegt wird.

13. Wasserkocher (2) nach Anspruch 12, wobei das mindestens eine Indexierungsorgan (34) in einem hinteren Abschnitt des Deckels (11) angeordnet ist.

14. Wasserkocher (2) nach einem der Ansprüche 1 bis 13, wobei der Behälter (4) eine zentrale Längsachse (A) aufweist und einen Griff (8) und einen Ausguss (9) umfasst, der konfiguriert ist, um gegenüber dem Griff (8) in Bezug auf die zentrale Längsachse (A) des Behälters (4) angeordnet zu sein.

15. Wasserkocher (2) nach Anspruch 14 in Kombination mit Anspruch 12, wobei das mindestens eine Indexierungselement (33) gegenüber dem Ausguss (9) in Bezug auf die zentrale Längsachse (A) des Behälters (4) angeordnet ist.

## Claims

1. Kettle (2) comprising:
∘ a container (4) defining an internal volume (5) intended for containingwater, wherein the water is to be heated, the container (4) comprising an upper filling opening (6) leading into the internal volume (5),
∘ a lid (11) movable between a closed position in which the lid (11) closes the upper filling opening (6) and an open position in which the lid (11) releases the upper filling opening (6), and
∘ a steam evacuation circuit configured to convey, outside the internal volume (5), steam generated within the internal volume (5) during boiling of the water contained in the internal volume (5), wherein the steam evacuation circuit is partly formed by the lid (11), the lid (11) having a drainage orifice (42) through which water contained in the lid (11) can be evacuated from the lid (11), **characterized in that** the container (4) comprises a sealing member (43) configured to seal the drainage orifice (42) when the lid (11) is in the closed position and to release the drainage orifice (42) when the lid (11) is in the open position.

2. Kettle (2) according to claim 1, wherein the drainage orifice (42) opens into an underside of the lid (11).

3. Kettle (2) according to claim 1 or 2, wherein the sealing member (43) is a sealing finger configured to penetrate into the drainage orifice (42) and seal the drainage orifice (42) when the lid (11) is in the closed position.

4. Kettle (2) according to any one of claims 1 to 3, wherein the drainage orifice (42) is located in a rear portion of the lid (11).

5. Kettle (2) according to any one of claims 1 to 4, wherein the lid (11) is removable with respect to the container (4).

6. Kettle (2) according to any one of claims 1 to 5, wherein the steam evacuation circuit comprises an internal chamber (15) defined by the lid (11), the drainage orifice (42) being fluidically connected to the internal chamber (15).

7. Kettle (2) according to any one of claims 1 to 6, wherein the steam evacuation circuit comprises at least one steam admission orifice provided on the lid (11), which is configured to be fluidically connected to the internal volume (5) defined by the container (4) when the lid (11) is in the closed position.

8. Kettle (2) according to claim 7, wherein the at least one steam admission orifice comprises a first steam admission orifice (35) and a second steam admission orifice (36) provided on the lid (11) and leading into an underside (12) of the lid (11).

9. Kettle (2) according to any one of claims 1 to 8, wherein the lid (11) comprises an anti-spill device configured to prevent spillage of water contained in the internal volume (5) via the steam evacuation circuit when the kettle (2) is tipped over.

10. Kettle (2) according to claim 9 in combination with claim 6, wherein the anti-spill device comprises a first steam flow tube (37) comprising a first steam inlet opening fluidically connected to the first steam admission orifice (35) and a first steam outlet opening leading into the internal chamber (15), and a second steam flow tube (38) comprising a second steam inlet opening fluidically connected to the second steam admission orifice (36) and a second steam outlet opening leading into the internal chamber (15).

11. Kettle (2) according to any one of claims 1 to 10, which comprises an angular indexing device configured to angularly index the lid (11) with respect to the container (4), so as to define a unique closed position of the lid (11) on the container (4).

12. Kettle (2) according to claim 11, wherein the angular indexing device comprises at least one indexing element (33) provided on the container (4), and at least one indexing member (34) provided on the lid (11) and configured to cooperate with the at least one indexing element (33) when the lid (11) is moved towards the closed position.

13. Kettle (2) according to claim 12, wherein the at least one indexing member (34) is located in a rear portion of the lid (11).

14. Kettle (2) according to any one of claims 1 to 13, wherein the container (4) has a central longitudinal axis (A) and comprises a handle (8) and a spout (9) configured to be located opposite the handle (8) with respect to the central longitudinal axis (A) of the container (4).

15. Kettle (2) according to claim 14 in combination with claim 12, wherein the at least one indexing element (33) is located opposite the spout (9) with respect to the central longitudinal axis (A) of the container (4).
